# FASCICULE DE BREVET EUROPEEN

(11) **EP 4 359 301 B1**
(45) Date de publication et mention de la délivrance du brevet: **30.04.2025**
(21) Numéro de dépôt: 22714182.7
(22) Date de dépôt: 14.03.2022
(51) Int. Cl.: B64C 11/38

(54) **SYSTÈME ET PROCÉDÉ DE COMMANDE DE LA MODIFICATION DU PAS DES PALES D'UNE TURBOMACHINE**
SYSTEM UND VERFAHREN ZUR STEUERUNG DER VERÄNDERUNG DER SCHAUFELNEIGUNG EINES TURBINENMOTORS
SYSTEM AND METHOD FOR CONTROLLING THE MODIFICATION OF THE PITCH OF THE BLADES OF A TURBINE ENGINE

(30) Priorité: 25.03.2021 FR 2103006
(43) Date de publication de la demande: 01.05.2024
(73) Titulaire: SAFRAN AIRCRAFT ENGINES, 75015 Paris (FR)
(72) Inventeur: AURIOL, Jacques, 77550 MOISSY-CRAMAYEL (FR)
(74) Mandataire: Argyma
(86) Numéro de dépôt international: PCT/EP2022/056441
(87) Numéro de publication internationale: WO 2022/200088

(56) Documents cités:
- FR-A1- 2 831 225
- US-A- 1 959 631
- US-A- 2 699 220
- US-A1- 2019 136 867

## Description

### DOMAINE TECHNIQUE

La présente invention concerne un système de commande pour la modification du pas des pales d'une turbomachine comprenant une pluralité de pales à angle de calage variable. Par pales, on entend aussi bien des pales d'une hélice d'un turbopropulseur que des pales d'une soufflante d'un turboréacteur.

A titre d'exemple, pour augmenter les performances et améliorer le rendement d'une turbomachine durant toutes les phases de son fonctionnement, du décollage à l'atterrissage, il est connu de faire varier le pas des pales. Ce calage variable permet de faire varier le régime de l'hélice ou de la soufflante pour notamment améliorer le rendement propulsif de l'hélice, sans modifier celui de la turbine qui est en général calé à son régime maximum continu. De plus, lors de l'atterrissage, le calage des pales permet d'inverser la poussée, ce qui permet d'éviter l'utilisation de systèmes conventionnels lourds et complexes d'inversion de poussée.

La difficulté d'un système de commande de la modification du pas est que les pales appartiennent à un repère tournant et que la modification de l'angle des pales nécessite de transmettre une énergie importante dans ce repère tournant.

Les systèmes actuels de commande de la modification du pas comportent généralement des actionneurs hydrauliques qui fournissent la force nécessaire pour placer le pas selon l'angle désiré (calage). De tels actionneurs hydrauliques appartiennent au repère tournant et sont alimentés par une pompe hydraulique appartenant au repère fixe. Ces systèmes sont particulièrement complexes, encombrants et présentent en outre des problèmes importants de fiabilité dus notamment à l'utilisation de joints ou de raccords tournants pour transmettre du fluide hydraulique entre le repère fixe et le repère tournant. Il est important de minimiser les fuites des raccords tournants car la chute de pression engendrée doit être compensée en augmentant la puissance de pompage, ce qui impacte la masse et le rendement du système d'actionnement

Une autre solution est de réaliser une commande électrique d'un actionneur électrique avec des contacts électriques qui sont rotatifs mais ceux-ci présentent l'inconvénient de s'user de manière précoce, ce qui est problématique lorsqu'ils sont peu accessibles. Une autre solution est de réaliser une commande électrique via un transformateur électrique relié à un actionneur électrique, ce qui contraint à prévoir un transformateur électrique avec des dimensions semblables au moteur électrique, qui est lourd, encombrant et onéreux. De manière incidente, on connaît dans l'art antérieur par la demande de brevet FR2831225A1 un dispositif électrohydraulique comportant un vérin hydraulique alimenté par une pompe hydraulique commandée par un moteur électrique qui appartiennent tous au repère tournant. Le moteur électrique, appartenant au repère tournant, est commandé et alimenté par induction via un circuit de commande appartenant au repère fixe. Le moteur électrique doit être suffisamment puissant pour alimenter la pompe hydraulique. Un tel moteur électrique augmente la masse dans le repère tournant, ce qui présente un inconvénient. Outre les difficultés à transmettre de la puissance dans le repère tournant, une autre difficulté est de gérer les cas de défaillance lors de ce transfert de puissance. En effet, lors d'une défaillance, il est nécessaire de mettre l'hélice dans une position de sécurité pour limiter la trainée, une défaillance conduit à la fois à la perte d'actionnement et à l'incapacité à mettre l'hélice en sécurité. Une redondance totale du transfert tournant pénalise la masse de manière importante.

On connait également dans l'art antérieur un système de contrôle et de changement du pas des pales d'une hélice d'un avion par la demande de brevet US2699220A.

L'invention vise ainsi à éliminer au moins certains de ces inconvénients.

### PRESENTATION DE L'INVENTION

L'invention concerne un système de commande selon la revendication 1.

Grâce à l'invention, l'énergie apportée à la pompe est prélevée sur l'arbre d'entrainement, ce qui évite de recourir à une transmission de puissance électrique élevée comme dans l'art antérieur. De manière avantageuse, il suffit de freiner la couronne de liaison pour régler l'angle des pales. Le dispositif de couplage magnétique est simple à entretenir et est fiable étant donné qu'il n'existe pas de contact. De manière avantageuse, le circuit de fluide est fermé (sans alimentation) et appartient uniquement au repère tournant.

De préférence, l'actionneur hydraulique comporte un corps d'actionneur comportant une première chambre et une deuxième chambre configurées pour recevoir un fluide hydraulique de manière à déplacer le corps d'actionneur en translation selon l'axe longitudinal en fonction de la pression dans les chambres. De manière préférée, la pompe hydraulique est configurée pour alimenter la première chambre. De préférence, la pompe hydraulique est configurée pour collecter du fluide hydraulique dans la deuxième chambre.

De manière préférée, la pompe hydraulique étant configurée pour déplacer l'actionneur hydraulique selon un premier sens, en particulier vers l'aval, le système de commande comprend un organe de rappel configuré pour exercer un effort de rappel axial dans un deuxième sens opposé au premier sens, en particulier vers l'amont. De manière avantageuse, l'organe de rappel est configuré pour réduire le pas des pales vers la position de sécurité. L'organe de rappel remplit ainsi une fonction de sécurité en réduisant automatiquement le pas en cas d'absence de pression hydraulique. De manière avantageuse, la mise en sécurité est passive. L'organe de rappel se présente de manière préférée sous la forme d'un ressort.

De préférence, en l'absence de couplage magnétique, la couronne de liaison est entrainée en rotation par la pompe hydraulique, en particulier, à la même vitesse de rotation. Ainsi, pour créer un différentiel de vitesse, le dispositif de couplage doit ralentir la couronne de liaison, ce qui nécessite peu d'énergie et permet en outre d'en collecter.

De manière préférée, le dispositif de couplage magnétique comporte une machine électrique à aimants permanents comportant des organes de stator solidaires de la structure fixe et des organes de rotor, solidaires de la couronne de liaison, qui sont couplés magnétiquement avec les organes de stator de manière à freiner magnétiquement la couronne de liaison.

Selon un aspect de l'invention, le dispositif de couplage magnétique comporte en outre une unité de commande configurée pour fournir un courant de commande aux organes de stator afin de faire varier la force de freinage.

De préférence, l'unité de commande est solidaire de la structure fixe. Elle peut avantageusement être logée dans un compartiment dont les conditions de température et de pression sont favorables, ce qui augmente la fiabilité et réduit le coût.

Selon un aspect préféré, l'unité de commande comporte au moins une résistance variable. Cela permet de paramétrer la force de freinage de manière pratique et de collecter l'énergie thermique et électrique lors du freinage.

Selon un aspect de l'invention, le système de commande comprend au moins deux pompes hydrauliques, les pompes hydrauliques étant en particulier montées en série ou en parallèle. De telles pompes hydrauliques permettent d'assurer une redondance et d'assurer l'équilibrage de l'ensemble.

Selon un aspect de l'invention, le système de commande comprend au moins un système de gestion de survitesse configuré pour modifier l'alimentation de l'actionneur hydraulique en cas de détection d'une survitesse. Ainsi, la sécurité est assurée.

L'invention concerne également un module de soufflante de turbomachine comportant un système de commande tel que présenté précédemment.

Il est également présenté une turbomachine, en particulier pour un aéronef, comportant un arbre d'entrainement s'étendant selon un axe longitudinal et adapté pour être entrainé en rotation autour dudit axe longitudinal par rapport à une structure fixe de ladite turbomachine, des pales montées radialement dans ledit arbre d'entrainement et adaptées pour être orientées selon un pas de pale et un dispositif d'orientation configuré pour modifier le pas des pales en fonction en fonction d'un effort axial appliqué audit dispositif d'orientation, la turbomachine comportant un système de commande tel que présenté précédemment pour appliquer l'effort axial sur le dispositif d'orientation.

L'invention concerne aussi un procédé de commande de la modification du pas des pales d'une soufflante de turbomachine au moyen d'un système de commande tel que présenté précédemment, le procédé comportant :
- une étape de modification de la vitesse d'entrainement de la couronne de liaison par le dispositif de couplage magnétique,
- une étape d'entrainement de la pompe hydraulique, par la couronne de liaison, afin d'activer l'actionneur hydraulique et appliquer un effort axial sur le dispositif d'orientation et
- une étape de modification du pas des pales en fonction en fonction de l'effort axial appliqué audit dispositif d'orientation.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique en coupe longitudinale d'une turbomachine selon une forme de réalisation de l'invention.
La figure 2 est une représentation schématique en coupe longitudinale de l'actionneur hydraulique dans une position aval.
La figure 3 est une représentation schématique en coupe longitudinale de l'actionneur hydraulique dans une position amont.
La figure 4 est une représentation schématique d'un procédé de commande de la modification du pas des pales.
La figure 5 est une représentation schématique d'une unité de commande du dispositif de couplage magnétique.
La figure 6 est une représentation schématique de positions possibles pour l'installation d'une unité de commande dans une turbomachine.
La figure 7 est une représentation schématique d'une première variante du système de commande pour assurer une redondance.
La figure 8 est une représentation schématique d'une deuxième variante du système de commande pour assurer une redondance.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention va être présentée pour un turbopropulseur mais l'invention s'applique à toute turbomachine ayant des pales rotatives dont le pas peut être modifié, en particulier, un turboréacteur ayant une soufflante avec des pales rotatives ou un turbopropulseur ayant une hélice avec des pales rotatives. Par la suite, par souci de concision, le terme « soufflante » sera utilisé pour viser aussi bien une soufflante de turboréacteur qu'une hélice de turbopropulseur.

Par la suite, l'invention va être présentée en relation avec un turbopropulseur mais l'invention s'applique également à un turboréacteur.

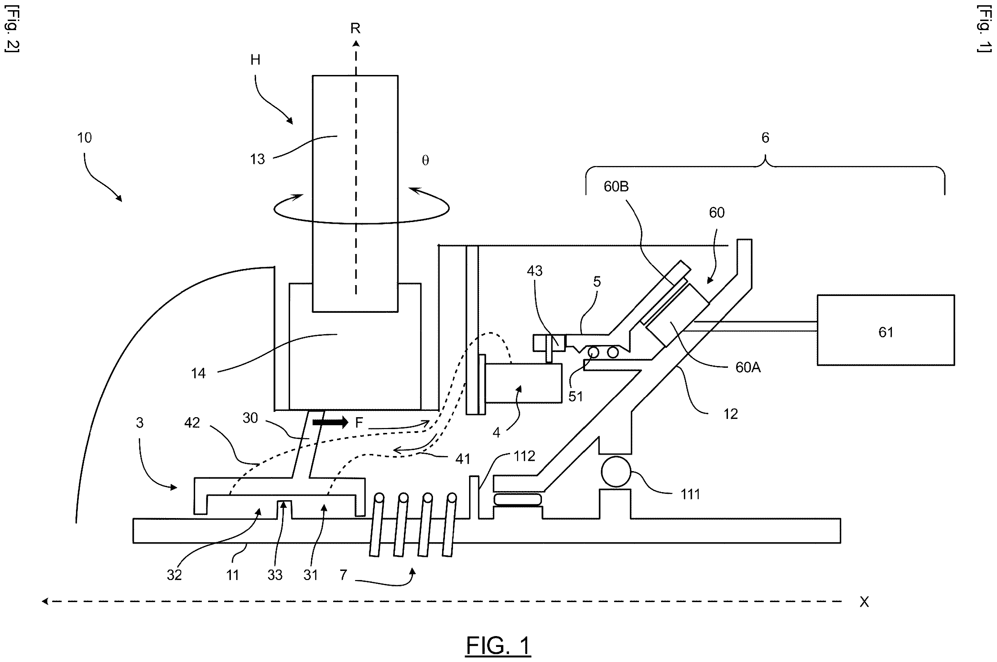

En référence à la figure 1, il est représenté une vue en coupe partielle d'un turbopropulseur 10 selon une forme de réalisation de l'invention.

La turbomachine 10 comprend un arbre d'entrainement 11 s'étendant selon un axe longitudinal X et adapté pour être entrainé en rotation autour dudit axe longitudinal X par rapport à une structure fixe 12 de ladite turbomachine 10, en particulier, par l'intermédiaire de paliers 111. Par la suite, les termes « aval » et « amont » sont déterminés par rapport à l'axe longitudinal X qui est orienté de l'aval vers l'amont sur la figure 1.

La turbomachine 10 comporte une soufflante H comportant des pales 13 montées radialement par rapport audit arbre d'entrainement 11, notamment par l'intermédiaire d'un moyeu, et adaptées pour être orientées selon un pas θ par rapport à un axe radial R qui est orthogonal à l'axe longitudinal X. Par la suite, le pas θ varie entre un pas minimal, dans lequel les pales 13 sont « en drapeau » et un pas maximal.

Toujours en référence à la figure 1, la turbomachine 10 comporte un dispositif d'orientation 14 configuré pour modifier le pas θ des pales 13 en fonction d'un effort axial F appliqué audit dispositif d'orientation 14. Un tel dispositif d'orientation 14 est connu de l'homme du métier, en particulier, par la demande de brevet FR3036093. De manière préférée, le dispositif d'orientation 14 comporte des manetons décentrés par rapport à l'axe radial R.

Afin de modifier le pas θ des pales 13, la turbomachine 10 comporte un système de commande qui comporte un actionneur hydraulique 3, une pompe hydraulique 4, une couronne de liaison 5 et un dispositif de couplage magnétique 6 qui vont être présentés en détails.

L'actionneur hydraulique 3 est configuré pour appliquer un effort axial F sur ledit dispositif d'orientation 14. Dans cet exemple, l'actionneur hydraulique 3 se présente sous la forme d'un vérin hydraulique monté extérieurement à l'arbre d'entrainement 11 et solidaire en rotation de ce dernier. Autrement dit, l'actionneur hydraulique 3 appartient au repère tournant.

Dans cet exemple, l'actionneur hydraulique 3 conduit de l'huile mais il va de soi que d'autres fluides hydrauliques pourraient être envisagés.

En référence à la figure 1, l'actionneur hydraulique 3 comporte un corps d'actionneur 30 comportant une première chambre 31 et une deuxième chambre 32 configurées pour recevoir du fluide hydraulique de manière à déplacer le corps d'actionneur 30 en translation selon l'axe longitudinal X en fonction de la pression dans les chambres 31, 32. Dans cette forme de réalisation, la première chambre 31 est en aval de la deuxième chambre 32. Dans cet exemple, comme cela sera présenté par la suite, lorsque la pression dans la première chambre 31 est augmentée, le corps d'actionneur 30 se déplace vers l'aval. L'actionneur hydraulique 3 comporte en outre une ouverture calibrée 33 qui permet de faire circuler du fluide de la première chambre 31 à la deuxième chambre 32 avec un débit maitrisé. Les chambres 31, 32 sont séparées par une paroi appartenant à l'arbre d'entrainement 11.

Dans cet exemple, la première chambre 31 est une chambre d'alimentation par la pompe hydraulique 4 tandis que la deuxième chambre 32 est une chambre de collecte de la pompe hydraulique 4. La pompe hydraulique 4 permet ainsi de déplacer le corps d'actionneur 30 axialement vers l'aval.

Dans cet exemple, le corps d'actionneur 30 se déplace entre une position extrême amont qui correspond au pas minimal et une position extrême aval qui correspond au pas maximal.

De manière préférée, l'actionneur hydraulique 3 possède des capteurs configurés pour détecter la position de l'actionneur hydraulique 3 et la comparer à sa position de consigne comme cela sera présenté par la suite.

Toujours en référence à la figure 1, la turbomachine 10 comporte en outre un organe de rappel 7 configuré pour exercer un effort de rappel axial dirigé vers l'amont sur le dispositif d'orientation 14, c'est-à-dire, dans le sens opposé à celui de l'entrainement par la pompe hydraulique 4.

Dans cet exemple, en référence à la figure 1, l'organe de rappel 7 est monté autour de l'arbre d'entrainement 11 entre un organe de butée 112 de l'arbre d'entrainement 11 et le corps d'actionneur 30 de manière à exercer une contrainte directement vers l'amont sur le corps d'actionneur 30.

Ainsi, lorsque la pression hydraulique augmente dans la première chambre 31, l'organe de rappel 7 permet de s'opposer au déplacement vers l'aval. Lorsque la première chambre 31 n'est plus sous pression, l'organe de rappel 7 permet de ramener le corps d'actionneur 30 vers l'amont en position de sécurité en forçant une circulation du fluide de la première chambre 31 vers la deuxième chambre 32 via l'ouverture calibrée 33. Autrement dit, l'organe de rappel 7 permet, de manière passive, de mettre les pales 13 en drapeau.

Comme cela sera présenté par la suite, l'organe de rappel 7 permet avantageusement d'améliorer la sécurité en réduisant le pas de pale 13 en cas de dysfonctionnement du système de commande. Les pales 13 sont avantageusement ramenées dans une position sécuritaire (pales en drapeau) en l'absence de pression hydraulique fournie par la pompe hydraulique 4.

De manière préférée, l'organe de rappel 7 se présente sous la forme d'un ressort mais il va de soi qu'il pourrait se présenter sous d'autres formes, par exemple, une tige souple ou un contrepoids.

Selon un aspect de l'invention, le dispositif de couplage magnétique 6 est configuré pour faire tourner la couronne de liaison 5 dans les deux sens et ainsi commander dynamiquement la position axiale de l'actionneur hydraulique 3. Un organe de rappel distinct n'est ainsi pas nécessaire.

Toujours en référence à la figure 1, la pompe hydraulique 4 est solidaire en rotation de l'arbre d'entrainement 11 et alimente l'actionneur hydraulique 3 afin d'appliquer l'effort axial F sur ledit dispositif d'orientation 14 en fonction du débit de la pompe hydraulique 4. Ainsi, la pompe hydraulique 4 et l'actionneur hydraulique 3 appartiennent au même référentiel tournant. La pompe hydraulique 4 est reliée à la première chambre 31 par une première canalisation d'alimentation 41 et à la deuxième chambre 32 par une deuxième canalisation de collecte 42. La pompe hydraulique 4 est configurée pour augmenter la pression hydraulique dans la première chambre 31. Autrement dit, la pompe hydraulique 4 est configurée pour alimenter en fluide la première chambre 31 via la première canalisation d'alimentation 41. Le fluide circule dans la deuxième chambre de collecte 32 via l'ouverture calibrée 33 avant d'être collecté par la pompe hydraulique 4 via la deuxième canalisation de collecte 42. Ainsi, le circuit de fluide appartient uniquement au repère tournant, ce qui limite le risque de fuite par comparaison à l'art antérieur qui exigeait des joints tournants pour mettre en relation des équipements du repère fixe et du repère tournant.

Les canalisations 41, 42 étant tournantes, la configuration en boucle du circuit de fluide permet avantageusement d'éviter l'apparition d'une différence de pression qui modifierait la position d'équilibre de l'actionneur hydraulique 3. En pratique, lorsque l'on somme les pressions sur l'ensemble de la boucle du circuit de fluide, on somme la pression « montante » et la pression « descendante » par rapport à l'axe de rotation X, ce qui conduit à une valeur totale nulle.

De manière préférée, la pompe hydraulique 4 est une pompe à volumétrie fixe, en particulier, une pompe à engrenages.

En référence à la figure 1, la pompe hydraulique 4 comporte une entrée mécanique 43 configurée pour recevoir un couple d'entrée. En fonction du couple d'entrée appliqué à l'entrée mécanique 43, la pompe hydraulique 4 applique un débit différent et donc une pression différente dans la première chambre 31. Autrement dit, la pompe hydraulique 4 permet de convertir le couple d'entrée en une consigne de débit, ce qui modifie avantageusement l'effort axial F.

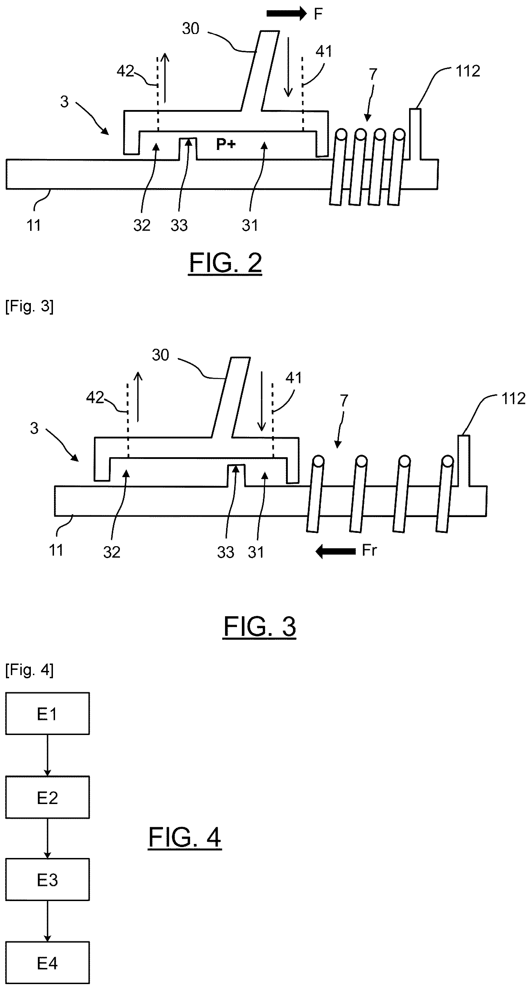

Dans cet exemple, lorsque le couple d'entrée est élevé, la pompe hydraulique 4 augmente la pression dans la première chambre 31, ce qui déplace le corps d'actionneur 30 vers l'aval et compresse l'organe de rappel 7 comme illustré à la figure 2. A l'inverse, lorsque le couple d'entrée est faible ou nul, la pompe hydraulique 4 ne fournit pas de débit et la pression entre les chambres 31, 32 est équilibrée par l'organe de rappel 7 comme illustré à la figure 3. L'organe de rappel 7 commande un faible angle de calage et les pales 13 sont en position de sécurité. Ainsi, en cas de dysfonctionnement de la pompe hydraulique 4, la sécurité est assurée par l'organe de rappel 7.

De manière préférée, l'entrée mécanique 43 se présente sous la forme d'un pignon d'entrainement qui s'engrène avec la couronne de liaison 5. De manière avantageuse, la couronne de liaison 5 n'est couplée qu'à la pompe hydraulique 4 de manière à ce qu'en l'absence de couplage magnétique, la pompe hydraulique 4 n'alimente pas (ou faiblement) l'actionneur hydraulique 3. L'entrée mécanique 43 et la pompe hydraulique 4 coopèrent mécaniquement de manière à ce que l'entrée mécanique 43 entraine en rotation la couronne de liaison 5 en l'absence de couplage magnétique. En effet, la pompe hydraulique 4 appartient au repère tournant et est entrainée en rotation. Comme cela va être présenté par la suite, le dispositif de couplage magnétique 6 permet de freiner magnétiquement la couronne de liaison 5 pour générer une différence de vitesse entre la couronne de liaison 5 et la pompe hydraulique 4.

La couronne de liaison 5 est montée mobile en rotation autour dudit axe longitudinal X par rapport à la structure fixe 12 de ladite turbomachine 10 et est configurée pour fournir le couple d'entrée appliqué à l'entrée mécanique 43 de la pompe hydraulique 4. Comme illustré à la figure 1, la couronne de liaison 5 est reliée à la structure fixe 12 par l'intermédiaire de paliers 51.

La couronne de liaison 5 est reliée mécaniquement à la pompe hydraulique 4 de manière à ce que le débit de la pompe hydraulique 4 soit proportionnel à la vitesse relative entre l'arbre d'entrainement 11 et la couronne de liaison 5. Comme expliqué précédemment, la pompe hydraulique 4 est solidaire en rotation de l'arbre d'entrainement 11. Etant donné que la vitesse de rotation de l'arbre d'entrainement 11 est connue, il suffit de régler la vitesse de rotation de la couronne de liaison 5 pour régler la vitesse relative entre l'arbre d'entrainement 11 et la couronne de liaison 5 pour modifier le débit de la pompe hydraulique 4. Etant donné que la couronne de liaison 5 est entrainée en rotation par la pompe hydraulique 4, il suffit de freiner la couronne de liaison 5 pour régler la vitesse relative entre l'arbre d'entrainement 11 et la couronne de liaison 5.

Le dispositif de couplage magnétique 6 est configuré pour modifier la vitesse d'entrainement de la couronne de liaison 5 autour dudit axe longitudinal X afin de commander, de manière indirecte, le pas des pales 13. En particulier, le dispositif de couplage magnétique 6 remplit une fonction de frein magnétique pour la couronne de liaison 5.

En référence à la figure 1, le dispositif de couplage magnétique 6 comporte une machine électrique à aimants permanents 60 comportant des organes de stator 60A solidaires de la structure fixe 12 et des organes de rotor 60B, solidaires de la couronne de liaison 5, qui sont couplés magnétiquement avec les organes de stator 60A. Le dispositif de couplage magnétique 6 comporte en outre une unité de commande 61, appartenant au repère fixe, configurée pour fournir un courant de commande aux organes de stator 60A afin de faire varier la vitesse de rotation de la couronne de liaison 5.

Ainsi, de manière résumée, l'unité de commande 61 peut commander le pas θ des pales 13 de manière pratique. La liaison magnétique sans contact entre la structure fixe 12 et la couronne de liaison 5 permet de réduire la complexité en conservant les organes hydrauliques (actionneur hydraulique 3 et pompe hydraulique 4) uniquement dans le référentiel tournant. En outre, il n'est pas nécessaire de prévoir un moteur électrique pour commander la pompe hydraulique 4. L'énergie nécessaire à l'activation est prélevée directement sur l'arbre d'entrainement 11 via la couronne de liaison 5. Le transfert de puissance est simplifié, ce qui facilite par ailleurs la maintenance.

De manière préférée, afin de faciliter la maintenance, le dispositif de couplage magnétique 6 est configuré pour générer un champ magnétique tournant afin de commander l'actionneur hydraulique 3 lorsque la turbomachine 10 est à l'arrêt. Selon un aspect préféré, comme évoqué précédemment, le dispositif de couplage magnétique 6 est configuré pour générer un champ magnétique tournant dans les deux sens pour contrôler dynamiquement la position de l'actionneur hydraulique 3 vers l'amont et vers l'aval sans organe de rappel 7.

De manière alternative, lorsque l'aéronef est au sol, un dispositif auxiliaire peut être connecté au dispositif de couplage magnétique 6 pour générer un champ magnétique tournant afin de commander l'actionneur hydraulique 3. Autrement dit, le dispositif auxiliaire peut être utilisé au cours de maintenance pour contrôler le fonctionnement du système de commande.

Un procédé de commande de modification du pas des pales 13 va être dorénavant présenté. Dans cet exemple de mise en œuvre, la machine électrique à aimants permanents 60 est initialement désactivée et la couronne de liaison 5 est solidaire en rotation de la pompe hydraulique 4 qui est, elle-même, solidaire en rotation de l'arbre d'entrainement 11. La pompe hydraulique 4 n'est pas alimentée et il n'existe pas de surpression dans la première chambre 31 de l'actionneur hydraulique 3. Le corps de l'actionneur 30 est contraint en position amont par l'organe de rappel 7 comme illustré à la figure 3, le pas θ étant alors minimal.

Dans cet exemple, l'unité de commande 61 reçoit un ordre de modification du pas des pales 13 envoyé, par exemple, par un calculateur de la turbomachine.

En référence à la figure 4, le procédé comporte une étape de modification E1 de la force électromotrice FEM dans la machine électrique à aimants permanents 60. Il en résulte une étape de modification E2 de la vitesse d'entrainement de la couronne de liaison 5 par le dispositif de couplage magnétique 6. Dans cet exemple, la machine électrique à aimants permanents 60 freine la couronne de liaison 5. La vitesse relative entre la pompe hydraulique 4 et la couronne de liaison 5 augmente.

Le procédé comporte une étape d'entrainement E3 de la pompe hydraulique 4, par la couronne de liaison 5, afin d'activer l'actionneur hydraulique 3 et appliquer un effort axial F sur le dispositif d'orientation 14. En pratique, la vitesse relative active la pompe hydraulique 4 qui alimente la première chambre 31 de l'actionneur hydraulique 3. Le corps d'actionneur 30 se déplace vers l'aval en s'opposant à l'organe de rappel 7 et applique un effort axial F sur le dispositif d'orientation 14 comme illustré à la figure 2.

Il s'ensuite une étape de modification E4 du pas θ des pales 13 en fonction de l'effort axial F appliqué audit dispositif d'orientation 14. Le pas θ des pales 13 augmente dans le cas présent pour mettre à plat les pales 13.

Ainsi, en paramétrant la force électromotrice FEM, le pas θ des pales 13 peut être commandé de manière pratique. De manière avantageuse, la force d'activation de la pompe hydraulique 4 est prélevée sur l'arbre d'entrainement 11, ce qui améliore le rendement.

Lorsque la force électromotrice FEM est stoppée, la force de rappel Fr de l'organe de rappel 7 déplace l'actionneur hydraulique 3 vers l'amont, ce qui modifie le pas θ des pales 13 en position de sécurité comme illustré à la figure 3. Ainsi, même en cas de défaillance du dispositif de couplage magnétique 6, de la couronne de liaison 5 ou de la pompe hydraulique 4, la sécurité est assurée.

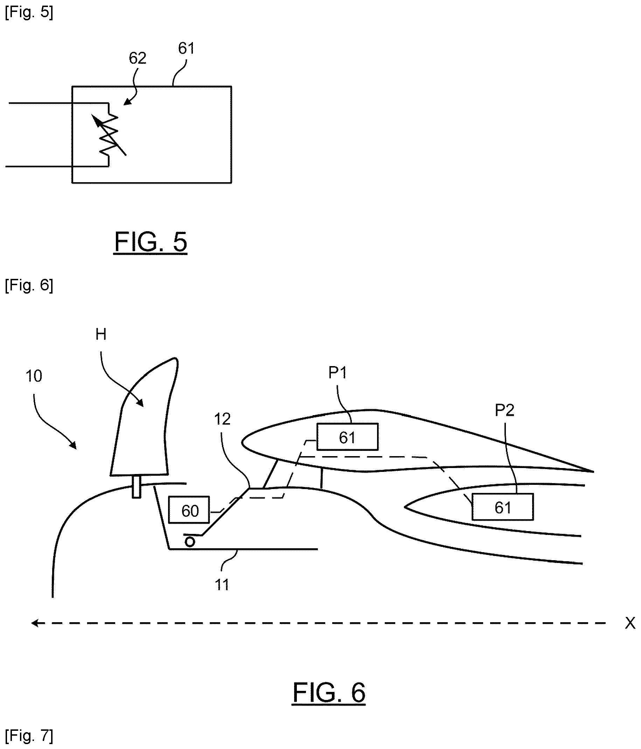

Selon un aspect de l'invention, en référence à la figure 5, l'unité de commande 61 comporte une résistance variable 62 de manière à faire varier l'intensité circulant dans les organes de stator 60A et ainsi faire varier la vitesse de rotation de la couronne de liaison 5 pour commander le pas θ des pales 13.

De manière avantageuse, lorsque la pompe hydraulique 4 est alimentée, le freinage permanent de la couronne de liaison 5 produit du courant dans la résistance variable 62 qui peut être collecté et utilisé par la suite. En pratique, la production d'électricité est plus importante à grand pas θ, c'est-à-dire, en régime de croisière. A l'inverse, seule la position en drapeau (pas minimal) ne produit pas d'énergie. Une batterie électrique peut être prévue pour stocker l'énergie électrique issue de la résistance variable 62 et la distribuer à d'autres équipements, par exemple, la pompe de carburant. De préférence encore, une batterie peut également être prévue pour stocker l'énergie thermique issue de la résistance variable 62.

De manière préférée, l'unité de commande 61 est positionnée dans un environnement thermique clément, par exemple, à proximité du calculateur de régulation de la turbomachine. A titre d'exemple, en référence à la figure 6, l'unité de commande 61 peut être positionnée à différentes positions de la turbomachine, en particulier, dans la nacelle (position P1) ou en aval dans la zone « core » (position P2), qui est située entre la paroi interne de la veine secondaire et la paroi externe de la veine primaire.

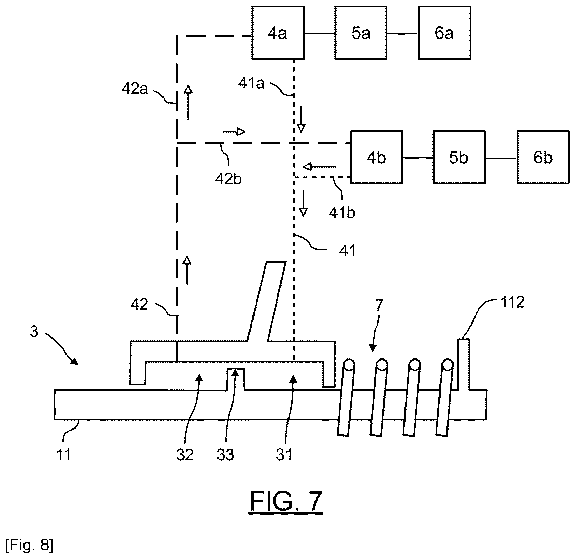

Selon un aspect de l'invention, en référence à la figure 7, il est représenté un premier exemple de redondance de type « série ». Sur cette figure, la turbomachine 10 comporte une première pompe hydraulique 4a reliée à une première couronne de liaison 5a et à un premier système de couplage magnétique 6a. De manière analogue, il est représenté une deuxième pompe hydraulique 4b reliée à une deuxième couronne de liaison 5b et à un deuxième système de couplage magnétique 6b de manière à assurer une redondance.

La première chambre 31 de l'actionneur hydraulique 3 est alimentée par une première canalisation d'alimentation 41 alimentée, d'une part, par une première canalisation d'alimentation élémentaire 41a reliée à la première pompe hydraulique 4a et, d'autre part, par une deuxième canalisation d'alimentation élémentaire 41b reliée à la deuxième pompe hydraulique 4b.

La deuxième chambre 32 de l'actionneur hydraulique 3 est reliée à une deuxième canalisation de collecte 42 connectée, d'une part, à une première canalisation de collecte élémentaire de retour 42a reliée à la première pompe hydraulique 4a et, d'autre part, à une deuxième canalisation élémentaire de collecte 42b reliée à la deuxième pompe hydraulique 4b.

En fonctionnement nominal, la première pompe hydraulique 4a et la deuxième pompe hydraulique 4b alimentent toutes les deux la première chambre 31 de l'actionneur hydraulique 3. Chaque système de couplage magnétique 6a, 6b assure un freinage calibré.

En cas de défaillance, par exemple dû à un court-circuit du deuxième système de couplage magnétique 6b qui augmente la force électromotrice FEM, la deuxième pompe hydraulique 4b est commandée en l'absence d'ordre de modification. Une telle modification conduit à un déplacement vers l'aval de l'actionneur hydraulique 3 et à une mise à plat des pales 13, c'est-à-dire, à l'opposé d'une mise en sécurité « en drapeau ».

Lorsqu'il est détecté que la position de l'actionneur hydraulique 3 est différente de la consigne de position, le premier système de couplage magnétique 6a réduit au maximum sa force électromotrice pour réduire le débit de la première pompe hydraulique 4a et ainsi compenser l'augmentation engendrée par la deuxième pompe hydraulique 4b. Un déplacement indésiré de l'actionneur hydraulique 3 est ainsi éliminé. De manière avantageuse, l'utilisation de deux pompes hydrauliques 4a, 4b en série permet de compenser la défaillance d'une des pompes hydrauliques 4a, 4b.

De manière alternative, afin d'éviter qu'une des pompes hydrauliques 4a, 4b ne fournisse un débit d'alimentation, il peut être prévu un clapet anti-retour sur l'une des pompes hydrauliques 4a, 4b, ce qui permet d'actionner l'actionneur hydraulique 3 de manière indépendante, la vitesse d'actionnement correspondant à la somme des deux pompes hydrauliques 4a, 4b. De manière optionnelle, afin d'éviter qu'une des pompes hydrauliques 4a, 4b ne commande l'actionneur hydraulique 3 vers les grands pas θ, il peut être prévu un mécanisme de gestion de la survitesse connu de l'homme du métier sous la désignation anglaise « Overspeed Governor » pour les turbopropulseurs. Si le pas θ devient trop faible, la vitesse augmente et peut être détectée. Ces aspects seront présentés en détails par la suite.

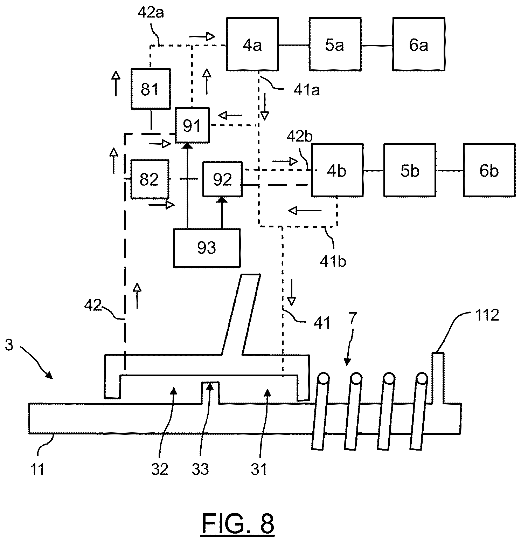

Selon un autre aspect de l'invention, en référence à la figure 8, il est représenté un deuxième exemple de redondance de type « parallèle ».

Sur cette figure, de manière analogue à précédemment, la turbomachine 10 comporte une première pompe hydraulique 4a reliée à une première couronne de liaison 5a et à un premier système de couplage magnétique 6a. De manière analogue, il est représenté une deuxième pompe hydraulique 4b reliée à une deuxième couronne de liaison 5b et à un deuxième système de couplage magnétique 6b de manière à assurer une redondance.

La première chambre 31 de l'actionneur hydraulique 3 est alimentée par une première canalisation d'alimentation 41 alimentée, d'une part, par une première canalisation d'alimentation élémentaire 41a reliée à la première pompe hydraulique 4a et, d'autre part, par une deuxième canalisation d'alimentation élémentaire 41b reliée à la deuxième pompe hydraulique 4b.

La deuxième chambre 32 de l'actionneur hydraulique 3 est reliée à une deuxième canalisation de collecte 42 connectée, d'une part, à une première canalisation de collecte élémentaire 42a reliée à la première pompe hydraulique 4a et, d'autre part, à une deuxième canalisation de collecte élémentaire 42b reliée à la deuxième pompe hydraulique 4b. Dans cet exemple, un premier clapet anti-retour 81 est monté dans la première canalisation de collecte élémentaire 42a et un deuxième clapet anti-retour 82 est monté dans la deuxième canalisation de collecte élémentaire 42b. De tels clapets antiretour 81, 82 permettent d'utiliser alternativement les deux pompes hydrauliques 4a, 4b en cas de perte de pression d'une des pompes hydrauliques 4a, 4b.

En fonctionnement nominal, la première pompe hydraulique 4a et la deuxième pompe hydraulique 4b alimentent toutes les deux la première chambre 31 de l'actionneur hydraulique 3.

Toujours en référence à la figure 8, un mécanisme de gestion de la survitesse, comprenant un premier organe 91 et un deuxième organe 92, est également présent. Le premier organe 91 est monté dans la première canalisation de collecte élémentaire 42a en parallèle du premier clapet anti-retour 81. Le deuxième organe 92 du mécanisme de gestion de la survitesse est monté dans la deuxième canalisation de collecte élémentaire 42b en série du deuxième clapet anti-retour 82. Le premier organe 91 et le deuxième organe 92 du mécanisme de gestion de la survitesse sont tous les deux connectés à la première canalisation d'alimentation élémentaire 41a comme illustré à la figure 8.

Si une des pompes hydrauliques 4a, 4b est défaillante, le mécanisme de gestion de la survitesse comporte un organe de détection de vitesse 93 qui, au-delà d'un seuil de vitesse prédéterminé, commande le premier organe 91 et/ou le deuxième organe 92 pour détourner l'alimentation de la première chambre 31 et placer les pales 13 en position de sécurité. De manière préférée, l'organe de détection de vitesse 93 comporte une masselotte sensible à la force centrifuge montée avec un organe de rappel de manière à déterminer le seuil de vitesse. De préférence, chaque organe 91, 92 se présente sous la forme d'un tiroir coulissant de manière à connecter directement une canalisation d'entrée et une canalisation de retour d'une pompe hydraulique 4a, 4b en cas de survitesse. Autrement dit, chaque organe 91, 92 comporte au moins deux positions (une position passante et une position de déviation de sécurité) qui sont commandées par l'organe de détection de vitesse 93. Ainsi, tout modification indésirable du pas θ est évitée. Il va de soi que plusieurs masselottes pourraient être utilisées sur plusieurs tiroirs.

Lorsque deux pompes hydrauliques 4a, 4b sont utilisées, celles-ci sont de préférence positionnées de manière diamétralement opposée afin de réduire le balourd.

## Revendications

1. Système de commande pour la modification du pas des pales (13) d'une soufflante de turbomachine (10), en particulier pour un aéronef,
- la turbomachine (10) comportant
- un arbre d'entrainement (11) s'étendant selon un axe longitudinal (X) et adapté pour être entrainé en rotation autour dudit axe longitudinal (X) par rapport à une structure fixe (12) de ladite turbomachine (10),
- des pales (13) montées radialement par rapport audit arbre d'entrainement (11) et adaptées pour être orientées selon un pas de pale (θ) et
- un dispositif d'orientation (14) configuré pour modifier le pas des pales (θ) en fonction d'un effort axial (F) appliqué audit dispositif d'orientation (14),
- le système de commande comportant
- un actionneur hydraulique (3), configuré pour être solidaire en rotation de l'arbre d'entrainement (11), afin d'appliquer l'effort axial (F) sur ledit dispositif d'orientation (14)
- une pompe hydraulique (4), configurée pour être solidaire en rotation de l'arbre d'entrainement (11), alimentant l'actionneur hydraulique (3) afin d'appliquer l'effort axial (F) sur ledit dispositif d'orientation (14) en fonction du débit de la pompe hydraulique (4),
- système de commande **caractérisé par le fait qu'**il comporte
- une couronne de liaison (5) configurée pour être montée mobile en rotation autour dudit axe longitudinal (X) par rapport à la structure fixe (12) de ladite turbomachine (10), ladite couronne de liaison (5) étant reliée mécaniquement à la pompe hydraulique (4) de manière à ce que le débit de la pompe hydraulique (4) soit proportionnel à la vitesse relative entre l'arbre d'entrainement (11) et la couronne de liaison (5),
- un dispositif de couplage magnétique (6) configuré pour piloter la vitesse d'entrainement de la couronne de liaison (5) afin de commander le pas des pales (13) indépendamment de la vitesse de l'arbre d'entrainement (11).

2. Système de commande selon la revendication 1, dans lequel l'actionneur hydraulique (3) comporte un corps d'actionneur (30) comportant une première chambre (31) et une deuxième chambre (32) configurées pour recevoir un fluide hydraulique de manière à déplacer le corps d'actionneur (30) en translation selon l'axe longitudinal X en fonction de la pression dans les chambres (31, 32).

3. Système de commande selon l'une des revendications 1 à 2, dans lequel la pompe hydraulique (4) étant configurée pour déplacer l'actionneur hydraulique (3) selon un premier sens, en particulier vers l'aval, le système de commande comprend un organe de rappel (7) configuré pour exercer un effort de rappel axial (Fr) dans un deuxième sens opposé au premier sens, en particulier vers l'amont.

4. Système de commande selon l'une des revendications 1 à 3, dans lequel, en l'absence de couplage magnétique, la couronne de liaison (5) est entrainée en rotation par la pompe hydraulique (4), en particulier, à la même vitesse de rotation.

5. Système de commande selon l'une des revendications 1 à 4, dans lequel le dispositif de couplage magnétique (6) comporte une machine électrique à aimants permanents (60) comportant des organes de stator (60A) configurés pour être solidaires de la structure fixe (12) et des organes de rotor (60B), solidaires de la couronne de liaison (5), qui sont couplés magnétiquement avec les organes de stator (60A) de manière à freiner magnétiquement la couronne de liaison (5).

6. Système de commande selon la revendication 5, dans lequel le dispositif de couplage magnétique (6) comporte en outre une unité de commande (61) configurée pour fournir un courant de commande aux organes de stator (60A) afin de faire varier la force de freinage.

7. Système de commande selon la revendication 6, dans lequel l'unité de commande (61) est configurée pour être solidaire de la structure fixe (12).

8. Système de commande selon l'une des revendications 6 et 7, dans lequel l'unité de commande (61) comporte au moins une résistance variable (62).

9. Système de commande selon l'une des revendications 1 à 8, comprenant au moins deux pompes hydrauliques (4a, 4b), les pompes hydrauliques (4a, 4b) étant en particulier montées en série ou en parallèle.

10. Système de commande selon la revendication 9, comprenant au moins un système de gestion de survitesse configuré pour modifier l'alimentation de l'actionneur hydraulique (3) en cas de détection d'une survitesse.

11. Module de soufflante de turbomachine (10) comportant un système de commande selon l'une des revendications 1 à 10.

12. Procédé de commande de la modification du pas des pales (13) d'une soufflante de turbomachine (10) au moyen d'un système de commande selon l'une des revendications 1 à 10, le procédé comportant :
- une étape de modification de la vitesse d'entrainement de la couronne de liaison (5) par le dispositif de couplage magnétique (6),
- une étape d'entrainement de la pompe hydraulique (4), par la couronne de liaison (5), afin d'activer l'actionneur hydraulique (3) et appliquer un effort axial (F) sur le dispositif d'orientation (14) et
- une étape de modification du pas des pales (θ) en fonction en fonction de l'effort axial (F) appliqué audit dispositif d'orientation (14).

## Patentansprüche

1. System zur Steuerung der Änderung des Winkels der Blätter (13) eines Gebläses einer Turbomaschine (10), insbesondere für ein Fluggerät,
- wobei die Turbomaschine (10) aufweist
- eine Antriebswelle (11), die sich gemäß einer Längsachse (X) erstreckt und geeignet ist, in Bezug auf eine feste Struktur (12) der Turbomaschine (10) um die Längsachse (X) rotatorisch angetrieben zu werden,
- Blätter (13), die radial in Bezug auf die Antriebswelle (11) angebracht und geeignet sind, gemäß einem Blattwinkel (θ) ausgerichtet zu werden, und
- eine Ausrichtvorrichtung (14), die ausgelegt ist, um den Blattwinkel (θ) in Abhängigkeit von einer auf die Ausrichtvorrichtung (14) ausgeübten Axialkraft (F) zu ändern,
- wobei das Steuerungssystem aufweist
- einen hydraulischen Aktuator (3), der ausgelegt ist, um mit der Antriebswelle (11) rotationsfest verbunden zu sein, um die Axialkraft (F) auf die Ausrichtvorrichtung (14) auszuüben,
- eine Hydraulikpumpe (4), die ausgelegt ist, um mit der Antriebswelle (11) rotationsfest verbunden zu sein, die den hydraulischen Aktuator (3) versorgt, um die Axialkraft (F) auf die Ausrichtvorrichtung (14) in Abhängigkeit vom Durchfluss der Hydraulikpumpe (4) auszuüben,
- wobei das Steuerungssystem **dadurch gekennzeichnet ist, dass** es aufweist
- einen Verbindungskranz (5), der ausgelegt ist, um rotationsbeweglich um die Längsachse (X) in Bezug auf die feste Struktur (12) der Turbomaschine (10) angebracht zu sein, wobei der Verbindungskranz (5) mechanisch mit der Hydraulikpumpe (4) derart verbunden ist, dass der Durchfluss der Hydraulikpumpe (4) proportional zur relativen Geschwindigkeit zwischen der Antriebswelle (11) und dem Verbindungskranz (5) ist,
- eine magnetische Kupplungsvorrichtung (6), die ausgelegt ist, um die Antriebsgeschwindigkeit des Verbindungskranzes (5) zu steuern, um den Winkel der Blätter (13) unabhängig von der Geschwindigkeit der Antriebswelle (11) zu steuern.

2. Steuerungssystem nach Anspruch 1, wobei der hydraulische Aktuator (3) einen Aktuatorkörper (30) aufweist, der eine erste Kammer (31) und eine zweite Kammer (32) aufweist, die ausgelegt sind, um ein Hydraulikfluid derart aufzunehmen, dass der Aktuatorkörper (30) in Abhängigkeit vom Druck in den Kammern (31, 32) gemäß der Längsachse X translatorisch verlagert wird.

3. Steuerungssystem nach einem der Ansprüche 1 bis 2, wobei die Hydraulikpumpe (4) ausgelegt ist, um den hydraulischen Aktuator (3) in eine erste Richtung, insbesondere stromabwärts, zu bewegen, wobei das Steuerungssystem ein Rückstellelement (7) umfasst, das ausgelegt ist, um eine axiale Rückstellkraft (Fr) in eine zweite, der ersten Richtung entgegengesetzten Richtung, insbesondere stromaufwärts, auszuüben.

4. Steuerungssystem nach einem der Ansprüche 1 bis 3, wobei bei Abwesenheit einer magnetischen Kopplung der Verbindungskranz (5) von der Hydraulikpumpe (4), insbesondere mit derselben Drehzahl, rotatorisch angetrieben wird.

5. Steuerungssystem nach einem der Ansprüche 1 bis 4, wobei die magnetische Kopplungsvorrichtung (6) eine elektrische Maschine mit Permanentmagneten (60) aufweist, die Statorelemente (60A) aufweist, die ausgelegt sind, um mit der festen Struktur (12) fest verbunden zu sein, und Rotorelemente (60B), die mit dem Verbindungskranz (5) fest verbunden sind, die mit den Statorelementen (60A) derart magnetisch gekoppelt sind, dass sie den Verbindungskranz (5) magnetisch bremsen.

6. Steuerungssystem nach Anspruch 5, wobei die magnetische Kopplungsvorrichtung (6) ferner eine Steuereinheit (61) umfasst, die ausgelegt ist, um den Statorelementen (60A) einen Steuerstrom zuzuführen, um die Bremskraft zu ändern.

7. Steuerungssystem nach Anspruch 6, wobei die Steuereinheit (61) ausgelegt ist, um fest mit der festen Struktur (12) verbunden zu sein.

8. Steuerungssystem nach einem der Ansprüche 6 und 7, wobei die Steuereinheit (61) mindestens einen variablen Widerstand (62) aufweist.

9. Steuerungssystem nach einem der Ansprüche 1 bis 8, umfassend mindestens zwei Hydraulikpumpen (4a, 4b), wobei die Hydraulikpumpen (4a, 4b) insbesondere in Reihe oder parallel angebracht sind.

10. Steuerungssystem nach Anspruch 9, umfassend mindestens ein Überdrehzahl-Managementsystem, das ausgelegt ist, um die Versorgung des hydraulischen Aktuators (3) zu ändert, wenn eine Überdrehzahl erkannt wird.

11. Gebläsemodul einer Turbomaschine (10), aufweisend ein Steuerungssystem nach einem der Ansprüche 1 bis 10.

12. Verfahren zur Steuerung der Änderung des Winkels der Blätter (13) eines Gebläses einer Turbomaschine (10) mittels eines Steuerungssystems nach einem der Ansprüche 1 bis 10, wobei das Verfahren aufweist:
- einen Schritt des Änderns der Antriebsgeschwindigkeit des Verbindungskranzes (5) durch die magnetische Kopplungsvorrichtung (6),
- einen Schritt des Antreibens der Hydraulikpumpe (4) durch den Verbindungskranz (5), um den hydraulischen Aktuator (3) zu aktivieren und eine Axialkraft (F) auf die Ausrichtvorrichtung (14) auszuüben, und
- einen Schritt des Änderns des Blattwinkels (θ) in Abhängigkeit von der auf die Ausrichtvorrichtung (14) ausgeübten Axialkraft (F).

## Claims

1. A system for controlling the pitch modification of the blades (13) of a fan of a turbomachine (10), in particular for an aircraft,
- the turbomachine (10) comprising
- a drive shaft (11) extending along a longitudinal axis (X) and adapted to be rotatably driven about said longitudinal axis (X) with respect to a fixed structure (12) of said turbomachine (10),
- the blades (13) radially mounted with respect to said drive shaft (11) and adapted to be oriented at a blade pitch (θ) and
- an orientation device (14) configured to modify the pitch of the blades (θ) as a function of an axial load (F) applied to said orientation device (14),
- the control system comprising
- a hydraulic actuator (3), configured to be rotatably integral with the drive shaft (11), in order to apply the axial load (F) to said orientation device (14)
- a hydraulic pump (4), configured to be rotatably integral with the drive shaft (11), supplying the hydraulic actuator (3) in order to apply the axial load (F) to said orientation device (14) as a function of the flow rate of the hydraulic pump (4),
- which control system is **characterized by** the fact that it comprises
- a connecting ring gear (5) rotatably movably mounted about said longitudinal axis (X) with respect to the fixed structure (12) of said turbomachine (10), said connecting ring gear (5) being mechanically connected to the hydraulic pump (4) so that the flow rate of the hydraulic pump (4) is proportional to the relative speed between the drive shaft (11) and the connecting ring gear (5),
- a magnetic coupling device (6) configured to pilot the drive speed of the connecting ring gear (5) in order to control the pitch of the blades (13) independently of the speed of the drive shaft (11).

2. The control system according to claim 1, wherein the hydraulic actuator (3) comprises an actuator body (30) having a first chamber (31) and a second chamber (32) configured to receive hydraulic fluid so as to translationally move the actuator body (30) along the longitudinal axis X as a function of the pressure in the chambers (31, 32).

3. The control system according to any of claims 1 to 2, wherein the hydraulic pump (4) being configured to move the hydraulic actuator (3) in a first direction, in particular downstream, the control system comprises a return member (7) configured to exert an axial return load (Fr) in a second direction opposite to the first direction, in particular upstream.

4. The control system according to any of claims 1 to 3, wherein, in the absence of magnetic coupling, the connecting ring gear (5) is rotatably driven by the hydraulic pump (4), in particular at the same rotational speed.

5. The control system according to any of claims 1 to 4, wherein the magnetic coupling device (6) comprises a permanent magnet electric machine (60) comprising stator members (60A) integral with the fixed structure (12) and rotor members (60B), integral with the connecting ring gear (5), which are magnetically coupled with the stator members (60A) so as to magnetically brake the connecting ring gear (5).

6. The control system according to claim 5, wherein the magnetic coupling device (6) further comprises a control unit (61) configured to provide a control current to the stator members (60A) in order to vary the braking force.

7. The control system according to claim 6, wherein the control unit (61) is integral with the fixed structure (12).

8. The control system according to any of claims 6 and 7, wherein the control unit (61) comprises at least one variable resistor (62).

9. The control system according to any of claims 1 to 8, comprising at least two hydraulic pumps (4a, 4b), the hydraulic pumps (4a, 4b) being in particular connected in series or in parallel.

10. The control system according to claim 9, comprising at least one overspeed management system configured to modify the power supply to the hydraulic actuator (3) in the event of an overspeed detection.

11. A turbomachine fan module (10) comprising a control system according to any of claims 1 to 10.

12. A method for controlling the pitch modification of the blades (13) of a fan of a turbomachine (10) by means of a control system according to any of claims 1 to 10, the method comprising:
- a step of modifying the drive speed of the connecting ring gear (5) by the magnetic coupling device (6),
- a step of driving the hydraulic pump (4), by the connecting ring gear (5), in order to activate the hydraulic actuator (3) and to apply an axial load (F) to the orientation device (14) and
- a step of modifying the pitch of the blades (θ) as a function of the axial load (F) applied to said orientation device (14).
